Europäisches Patentamt

European Patent Office

Office européen des brevets

(11) Veröffentlichungsnummer: **0 217 130 B1**

(19)

(12) **EUROPÄISCHE PATENTSCHRIFT**

(45) Veröffentlichungstag der Patentschrift: **08.04.92**

(21) Anmeldenummer: **86111803.2**

(22) Anmeldetag: **26.08.86**

(51) Int. Cl.⁵: **H04M  19/00**, H04M 3/22

(54) Schaltungsanordnung für eine elektronische Schnittstellenschaltung.

(30) Priorität: **30.09.85 DE 3534890**

(43) Veröffentlichungstag der Anmeldung:
**08.04.87 Patentblatt  87/15**

(45) Bekanntmachung des Hinweises auf die
Patenterteilung:
**08.04.92 Patentblatt  92/15**

(84) Benannte Vertragsstaaten:
**CH DE LI LU**

(56) Entgegenhaltungen:
**DE-A- 2 939 008**

**IEEE, INTERNATIONAL SWITCHING SYMPOSI-
UM, Montreal, 21.-25. September 1981,
"Session 14B", "Paper 3", Seiten 1-7, New
York, US; J. COTTON et al.: "Technology and
techniques in the line circuit of a fully digital
switching system"**

**ELECTRONIC DESIGN, 27. September 1980,
Seiten 84-91; L. BROWN et al.: "One chip
closes in on SLIC functions"**

(73) Patentinhaber: **SIEMENS AKTIENGESELL-
SCHAFT
Wittelsbacherplatz 2
W-8000 München 2(DE)**

(72) Erfinder: **Krimmer, Roland, Dipl.-Ing.
Johann-Clenze-Strasse 89
W-8000 München 70(DE)**
Erfinder: **Rudolf, Hans-Werner, Dr. rer.nat.
Wörthstrasse 13
W-8000 München 80(DE)**

# Beschreibung

Die Erfindung betrifft eine Schaltungsanordnung für eine elektronische Schnittstellenschaltung einer Teilnehmeranschlußschaltung zum Anschluß einer Teilnehmeranschlußleitung an die Vermittlungsstelle eines digitalen Fernmeldevermittlungssystems, insbesondere Fernsprechvermittlungssystems, wobei die Schnittstellenschaltung unter anderem eine von einer Speisespannungsquelle beaufschlagte Speiseschaltung für die Teilnehmerspeisung und eine Indikationsschaltung zur Schleifenzustandserkennung umfaßt.

Elektronische Schnittstellenschaltungen, die konventionelle Teilnehmeranschlußschaltungen ersetzen, die unter anderem Übertrager und Relais enthalten, weisen im Ruhezustand, also dann, wenn von der angeschlossenen Teilnehmerstation aus nicht gesprochen wird, eine relativ große Verlustleistung auf.

Bei einer bekannten elektronischen Schnittstellenschaltung (DE-PS 29 39 008) ist aus diesem Grund das Speiseglied für die Zufuhr des Speisestroms so ausgebildet, daß es einen hochohmigen und einen niederohmigen Schaltzustand einnehmen kann. Der hochohmige Schaltzustand wird dabei im Ruhezustand der Anordnung eingenommen. Damit auch in diesem Zustand von der Indikationsschaltung der Anreizzustand erkannt werden kann, also der Zustand der sich durch das Abheben des Handapparates bei der Teilnehmerstation ergibt, ist dort durch die jede Schnittstellenschaltung beeinflussende Steuerschaltung für die Indikationsschaltung ein Schwellwert wirksam geschaltet, der gegenüber demjenigen für den niederohmigen Schaltzustand des Speisegliedes maßgebenden Schwellwert bezogen auf die Spannungsänderungen an den Leitungsadern der Teilnehmeranschlußleitung ein höheres Niveau aufweist.

Die bei dieser Schnittstellenschaltung erzielte Verminderung des Stromverbrauchs im Ruhezustand ist aber noch nicht ausreichend.

Die Aufgabe der Erfindung besteht daher darin, eine Schaltungsanordnung für eine elektronische Schnittstellenschaltung der eingangs beschriebenen Art anzugeben, durch die die Verlustleistung der Schnittstellenschaltung im Ruhezustand noch weiter verringert wird.

Erfindungsgemäß wird diese Aufgabe durch eine Schaltungsanordnung der eingangs genannten Art gelöst, die gekennzeichnet ist durch Schaltelemente, durch die die Schnittstellenschaltung im Ruhebetriebszustand sowohl von den Adern der Teilnehmeranschlußleitung als auch zumindest mit Wirkung für einen Teil seiner Bestandteile von der Speisespannungsquelle abtrennbar ist, sowie durch einen während der Zeit der Abtrennung der Schnittstellenschaltung oder eines Teils desselben wirksam geschalteten Schaltungsteil, über den eine Indikationsschaltung an die Adern der Teilnehmeranschlußleitung angeschlossen ist.

Bei der erfindungsgemäßen Lösung wird berücksichtigt, daß die vollständige Abtrennung der Speisespannungsquelle zwar die erwünschte Verlustleistungsreduzierung bringen würde, eine nach wie vor an den Teilnehmeranschlußleitungsadern liegende spannungslose Schnittstellenschaltung jedoch auf der Teilnehmerleitung zu völlig undefinierten Verhältnissen führen würde. Es ist ferner berücksichtigt, daß die Schnittstellenschaltung im spannungslosen Zustand auch keine Aufgaben mehr wahrnehmen könnte, also insbesondere die in ihr enthaltene Indikationsschaltung nicht in der Lage wäre, den Anreizzustand zu erkennen, der sich aus dem Ruhezustand heraus durch Abnehmen des Handapparates bei der an der Teilnehmeranschlußleitung angeschlossenen Teilnehmerstation ergibt. Die erfindungsgemäß vorgesehene völlige Abtrennung zumindest eines Teils der Schnittstellenschaltung sowie die Verwendung eines Schaltungsteils über den in diesem abgetrennten Zustand nunmehr eine Indikationsschaltung an die Adern der Teilnehmeranschlußleitung angeschlossen ist, sorgt hier für Abhilfe.

Die Abtrennung nur eines Teils der Schnittstellenschaltung von der Speisespannungsquelle kommt dann in Frage, wenn die Schnittstellenschaltung in einen Hochvoltteil und in einen Niedervoltteil untergliedert ist. In diesem Fall ist die Indikationsschaltung Bestandteil des Niedervoltteils. Der erwähnte Schaltungsteil sorgt dann dafür, daß bei abgetrenntem Hochvoltteil die Indikationsschaltung dennoch unter definierten Verhältnissen an den Adern der Teilnehmeranschlußleitung liegt und damit die Anreizindikation wahrnehmen kann.

Wenn die Schnittstellenschaltung als Ganzes von den Teilnehmerleitungsadern und von der Speisespannung abgetrennt wird, ist eine gesonderte Indikationsschaltung vorzusehen, die kein Bestandteil der Schnittstellenschaltung ist und die dann über den erwähnten Schaltungsteil wirksam geschaltet wird.

Nachstehend wird die Erfindung anhand eines Ausführungsbeispiels unter Bezugnahme auf eine Zeichnung näher erläutert.

In der Zeichnung zeigen

FIG 1    eine bekannte elektronische Schnittstellenschaltung mit, wie dargelegt, nicht ausreichenden Mitteln zur Verringerung der Verlustleistung im Ruhezustand.

FIG 2    ein Ausführungsbeispiel der erfindungsgemäßen Schnittstellenschaltung.

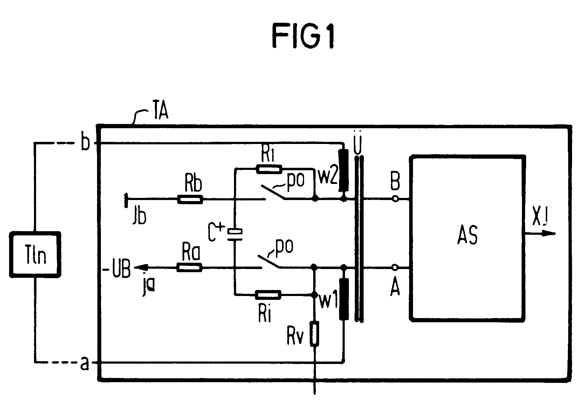

In der FIG 1 sind von einer Teilnehmeranschlußschaltung TA, die dem Anschluß einer Teilnehmerstation Tln über eine Teilnehmeranschlußleitung TL mit den Adern a und b dient, im wesentlichen nur die der Speisung und der Indikation
dienenden Schaltungsteile dargestellt. Das Speiseglied dieser Teilnehmeranschlußschaltung wird gebildet durch die Widerstände Ra, Rb und Ri, sowie
durch den Kondesator C. Die Widerstände Ri sind
hochohmig gegenüber den Widerständen Ra und
Rb und durch Schalter po überbrückbar. Diese
Schalter sind im Ruhezustand geöffnet, so daß die
Widerstände Ri im Speisestromkreis liegen und
demnach ein nur reduzierter Speisestrom fließt.
Dieser Speisestrom ist ausreichend für die Durchführung einer Schleifenschlußindikation durch eine
Indikationsschaltung AS. Sobald bei einem Schleifenschluß durch Abheben des Handapparates bei
der Teilnehmerstation Tln ein Anreizzustand vorliegt und dieser durch die Indikationsschaltung festgestellt worden ist, werden aufgrund eines Steuersignals, das die Indikationsschaltung abgibt, die
Schalter po in den Schließzustand gesteuert, womit
der Speisestromkreis niederohmig ist und damit
der normale Speisestrom fließen kann. Diese
stromsparende Methode genügt, wie dargelegt,
nicht in allen Fällen den Anforderungen.

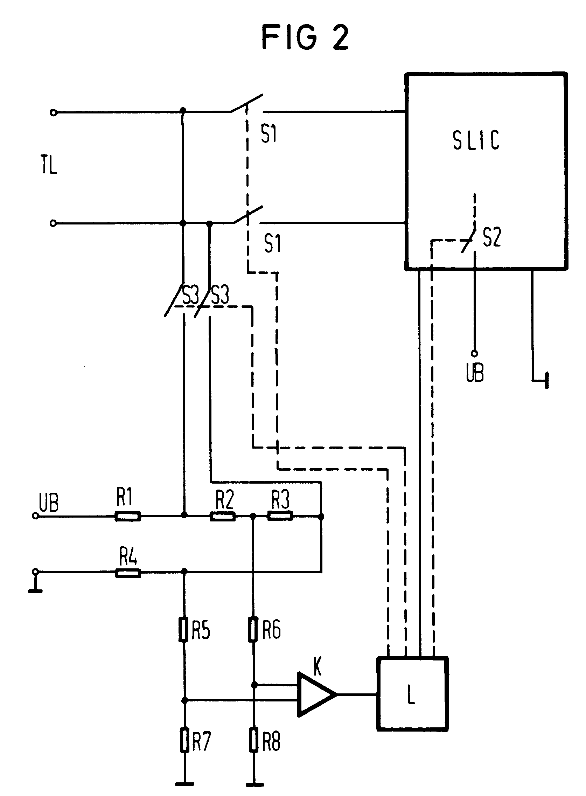

In der FIG 2, die die erfindungsgemäße Schaltung veranschaulicht, ist mit SLIC eine elektronische Schnittstellenschaltung angedeutet. Diese ist
über Schalter S1/S1 an die Adern a und b einer
Teilnehmeranschlußleitung TL anschaltbar.

Durch einen Schalter S2 innerhalb des die
Schnittstellenschaltung veranschaulichenden
Blocks ist angedeutet, daß diese Schnittstellenschaltung von der Speisespannungsquelle UB abgetrennt werden kann.

Auf der der Schnittstellenschaltung SLIC abgewendeten Seite der Schalter S1/S1 ist über Schalter S3/S3 ein zwischen der Speisespannung UB
und Erdpotential betriebenes Widerstandsnetzwerk
anschaltbar, das aus den Widerständen R1 bis R4
besteht. Zwischen den Verbindungspunkten der
Widerstände R2 und R3 bzw. R3 und R4 sind aus
den Widerständen R5 und R7 bzw. R6 und R8
gebildete Spannungsteiler angeschaltet. An den
Teilerpunkten dieser Spannungsteiler wird die Eingangsspannung für einen Vergleicher K abgenommen, der die Funktion einer externen Indikationsschaltung hat. Für das dargestellte Ausführungsbeispiel ist vorausgesetzt, daß die Schrittstellenschaltung als Ganzes von der Speisespannungsquelle
abgetrennt wird, und daß eine entsprechende Indikationsschaltung in der Schnittstellenschaltung enthalten ist, deren Anschaltebedingungen an die
Adern a und b dieselben sind, wie sie durch die
Widerstände R1 bis R4 bzw. durch die Spannungsteiler R5/R7 und R6/8 für die Indikationsschaltung
K geschaffen sind.

Das Ausgangssignal der Indikationsschaltung K wird einer Logikschaltung L Zugeführt, die Steuersignale für die Schalter S1/S1, S2 und S3/S3 abzugeben vermag.

Im Ruhezustand, d. h. wenn bei der an die
Teilnehmeranschlußleitung angeschlossenen Teilnehmerstation der Handapparat aufgelegt und damit die Teilnehmerleitungsschleife unterbrochen ist,
sind die Schalter S1/S1 und S2 geöffnet. Die
Schnittstellenschaltung ist damit einerseits von der
Speisespannungsquelle und andererseits von der
Teilnehmeranschlußleitung abgetrennt. Die Schalter
S3/S3 sind geschlossen, so daß das Widerstandsnetzwerk und damit die externe Indikationsschaltung wirksam geschaltet sind.

Sobald durch Abheben des Teilnehmerapparates die Teilnehmerleitungsschleife geschlossen
wird, erkennt die Indikationsschaltung K den Anreizzustand und veranlaßt nun über die Logikschaltung L das Schließen der Schalter S1/S1 und S2
sowie das Öffnen der Schalter S3/S3. Das bedeutet, daß nunmehr die Schnittstellenschaltung wieder
an die Speisespannung angeschaltet ist und die
weitere Indikation von Leitungszuständen, also z. B.
des Wahlzustandes, von der internen Indikationsschaltung übernommen wird.

In Fällen, in denen die Schnittstellenschaltung
SLIC in einen Hochvoltteil und einen Niedervoltteil
gegliedert ist, wobei die Indikationsschaltung dann
Bestandteil des Niedervoltteils ist, wird im Ruhezustand nur der Hochvoltteil von der Speisespannung
abgetrennt. Als weiterer Unterschied zum dargestellten Ausführungsbeispiel fehlt die zusätzliche
Indikationsschaltung. Auch die Logikschaltung ist in
diesen Niedervoltteil integriert. An zusätzlichen externen Schaltelementen sind daher lediglich das
Widerstandsnetzwerk mit den Widerständen R1 bis
R4 und die beiden Spannungsteiler mit den Widerständen R5, R7 und R6, R8 vorhanden, die in der
beschriebenen Weise mit Hilfe der Schalter S3/S3
wirksam geschaltet werden. Die Teilerpunkte der
Sapnnungsteiler sind dann an die interne Indikationsschaltung geführt, die demnach im Ruhezustand, wenn also die Schalter S1/S1 und S2 geöffnet sind, über die geschlossenen Schalter S3/S3
und das Widerstandsnetzwerk ihre Eingangssignale
zugeführt bekommt.

## Patentansprüche

1. Schaltungsanordnung für eine elektronische
   Schnittstellenschaltung einer Teilnehmeranschlußschaltung zum Anschluß einer Teilnehmeranschlußleitung an die Vermittlungsstelle
   eines digitalen Fernmeldevermittlungssystems,
   insbesondere Fernsprechvermittlungssystems,
   wobei die Schnittstellenschaltung unter anderem eine von einer Speisespannungsquelle beaufschlagte Speiseschaltung für die Teilnehmerspeisung und eine Indikationsschaltung zur Schleifenzustandserkennung umfaßt, **gekennzeichnet** durch Schaltelemente (S1/S1, S2), durch die die Schnittstellenschaltung (SLIC) im Ruhebetriebszustand sowohl von den Adern (a, b) der Teilnehmeranschlußleitung (TL) als auch zumindest mit Wirkung für einen Teil seiner Bestandteile von der Speisespannungsquelle (UB) abtrennbar ist, sowie durch einen während der Zeit der Abtrennung der Schnittstellenschaltung oder eines Teils derselben wirksam geschalteten Schaltungsteil (R1 bis R4, R5/R6, R6/R8) über den eine Indikationsschaltung (K) an die Adern (a, b) der Teilnehmeranschlußleitung anschließbar ist.

2. Schaltungsanordnung nach Anspruch 1, **dadurch gekennzeichnet,** daß die über den genannten Schaltungsteil (R1 bis R4, R5/R7, R6/R8) angeschlossene Indikationsschaltung (K) eine zusätzliche, keinen Bestandteil der Schnittstellenschaltung (SLIC) darstellende Indikationsschaltung ist.

3. Schaltungsanordnung nach Anspruch 1 für eine Schnittstellenschaltung, die in einen Hochvoltteil und einen Niedervoltteil gegliedert ist, wobei der Niedervoltteil unter anderem die Indikationsschaltung enthält, **dadurch gekennzeichnet,** daß im Ruhebetriebszustand nur der Hochvoltteil von der Teilnehmeranschlußschaltung und von der Speisespannungsquelle abgetrennt wird, und daß die durch den gesonderten Schaltungsteil angeschlossene Indikationsschaltung die im Niedervoltteil enthaltene Indikationsschaltung ist.

## Claims

1. Circuit arrangement for an electronic interface circuit of a subscriber line circuit for connecting a subscriber line to the exchange of a digital telecommunication switching system, particularly a telephone switching system, the interface circuit comprising, among other things, a power-feeding circuit, to which a power-feeding voltage source is applied, for feeding power to the subscriber and an indication circuit for loop status recognition, characterised by switching elements (S1/S1, S2) by means of which the interface circuit (SLIC) can be separated in the idling state both from the wires (a, b) of the subscriber line (TL) and, at least with effect for a part of its components, from the power-feeding voltage source (UB), and by a circuit section (R1 to R4, R5/R7, R6/R8), which is effectively switched during the time of the separation of the interface circuit or a part thereof, via which circuit section an indication circuit (K) can be connected to the wires (a, b) of the subscriber line.

2. Circuit arrangement according to Claim 1, characterised in that the indication circuit (K) connected via the said circuit section (R1 to R4, R5/R7, R6/ R8) is an additional indication circuit not representing a component of the interface circuit (SLIC).

3. Circuit arrangement according to Claim 1 for an interface circuit which is divided into a high-voltage section and a low-voltage section, the low-voltage section containing, among other things, the indication circuit, characterised in that, in the idling state, only the high-voltage section is separated from the subscriber line circuit and from the power-feeding voltage source and in that the indication circuit connected by the separate circuit section is the indication circuit contained in the low-voltage section.

## Revendications

1. Montage pour un circuit d'interface électronique d'un circuit de raccordement d'abonné pour le raccordement d'une ligne d'abonné au central d'un système numérique de commutation de télécommunications, notamment d'un système de commutation téléphonique, dans lequel le circuit d'interface comprend notamment un circuit d'alimentation chargé par une source de tension d'alimentation, pour l'alimentation de l'abonné et un circuit indicateur pour identifier l'état de la boucle, caractérisé par des éléments de commutation (S1/S1, S2), qui, à l'état de repos, permettent de déconnecter le circuit d'interface (SLIC) aussi bien par rapport aux conducteurs (a,b) de la ligne d'abonné (TL) qu'au moins, avec l'action d'une partie de ses composants, par rapport à la source d'alimentation (UB), ainsi qu'une partie de circuit (R1 à R4, RS/R6, R6/R8), activée pendant l'intervalle de temps de la déconnexion du circuit d'interface ou d'une partie de ce circuit et au moyen de laquelle un circuit indicateur (K) peut être raccordé aux conducteurs (a,b) de la ligne d'abonné.

2. Montage suivant la revendication 1, caractérisé par le fait que le circuit indicateur (K) raccordé par l'intermédiaire de ladite partie de circuit (R1 à R4, R5/R7, R6/R8) est un circuit indicateur supplémentaire ne faisant pas partie du circuit d'interface (SLIC).

**3.** Montage suivant la revendication 1 pour un circuit d'interface, qui est subdivisé en une partie haute tension et une partie basse tension, la partie basse tension contenant notamment le circuit indicateur, caractérisé par le fait qu'à l'état de repos, seule la partie haute tension est déconnectée du circuit de raccordement d'abonné et de la source de tension d'alimentation et que le circuit indicateur raccordé par la partie séparée du circuit est le circuit indicateur contenu dans la partie basse tension.

# FIG 1

# FIG 2